# EUROPEAN PATENT SPECIFICATION

(11) **EP 2 553 913 B1**
(45) Date of publication and mention of the grant of the patent: **18.03.2015**
(21) Application number: 11710516.3
(22) Date of filing: 29.03.2011
(51) Int. Cl.: H04M 1/05, H04M 1/15, H02G 11/02, H04R 1/10

(54) **A HANDSFREE ACCESSORY**
FREIHANDZUBEHÖR
ACCESSOIRE MAINS LIBRES

(30) Priority: 29.03.2010 NO 20100463
(43) Date of publication of application: 06.02.2013
(73) Proprietor: CM Invention AS, 3030 Drammen (NO)
(72) Inventor: CHRISTOFFERSEN, Kjetil, N-3030 Drammen (NO)
(74) Representative: Tofting, Arild
(86) International application number: PCT/EP2011/054818
(87) International publication number: WO 2011/120965

(56) References cited:
- GB-A- 2 280 168
- US-A1- 2001 035 242
- US-B1- 6 497 378

## Description

### Field of the Invention:

The present invention relates to an accessory for portable communication device. Particularly the present invention relates to a hands-free accessory for a telecommunication device such as mobile phones containing retractable mobile phone jack or plug and earpiece cord and audio signal interface housed in a central unit. The invention may also be used with other types of media players, such as MP3-players.

### Background of the invention:

Mobile telephones are carried by hand, in the pocket or a holster. In order to avoid the necessity to hold the telephone by hand near the ear and mouth to receive and talk over a mobile phone, hands-free devices are being widely used. Hands-free devices allow a person to make or receive phone calls without having to use his hands. Generally hands-free device connected to the mobile phone comprises an earpiece and a mouthpiece connected to the mobile phone terminal by a wire. Signal to and from the mobile phone to a person is transmitted through a circuit for converting the digital signal to audible acoustic signal. Similarly, the voice signal of the user is transmitted to the mobile phone through a microphone and suitable circuit, generally housed within the hands-free device, located in the vicinity of the mouth of the user. Normally the hands-free device hangs near the chest of the user while the connected earpiece is placed in the ear socket or placed over the ear.

With the introduction of more and more functional features in the mobile phone such as recording, play back, in addition to the basic receiving and answering telephone calls, the associated circuit is rapidly becoming more and more sophisticated and the hands-free device may contain various actuation switches for different activities.

Normally hands-free devices have a long length of wire to connect the mobile phone to the ear piece through the device, Due to variation of distance between the ear and the mobile phone due to height of the users as well as variable location of the mobile phone, the length of the wire can not be precisely ascertained. Therefore generally sufficiently long wire is provided. Such long wire is prone to entanglement or knots. It is also inconvenient for storing as it takes up space and is not easy to carry.

Most mobile phones are today sold with a wired hands free set with a microphone on the cord and a reply button located in the same unit as the microphone.

There are also a great variety of wireless hands-free ear and mouth pieces in the market. Most of these use the Bluetooth® protocol to transfer the signal. The three major disadvantages of a wireless hands-free set are: 1. It needs power and hence a battery that needs to be charged or replaced frequently. 2. The sound quality is not optimal for listening to music. 3. The hands-free device is usually quite small and is easy to lose, especially since it is not attached to the phone. Further, though these devices are convenient to use for simpler operations such as receiving and sending voice signals, these are inconvenient when the several other functions are required to be operated. Most MP3 players and mobile phones are equipped with a radio. This uses the cord as antenna. With a wireless set the radio cannot be used. Furthermore these devices are expensive, while the wired hands-free devices are less expensive and are frequently available as a part of the standard kit when purchasing a mobile phone. Moreover ,wireless hands-free sets emit radiation close to the head. Because of these disadvantages most people still prefer a wired hands-free set.

Therefore, there is need of a solution of this problem of easy handling the wires. U.S. Pat. No. 6,082,656 to Thornton discloses a retractable headset that is permanently incorporated into the wireless phone housing. However, headset cords often become snagged and can be damaged. If the headset cable is damaged the phone itself would have to be sent for repairing. It is also impossible to switch headsets and use the same headset with different mobile phones or MP3 players.

U.S. Pat. No. 5,832,098 to Chen discloses a retractable cord attachable to a wireless phone with a plastic bracket. This attachment scheme requires a separate piece of hardware to further attach the wireless phone to the user's body. Furthermore, this attachment scheme does not serve to protect the user's phone from damage, and is not operable with a case that substantially covers and protects the user's phone housing. The user is required to push buttons on the phone to adjust volume and accept calls. This means that the mobile phone either has to be readily available at all time or has to be picked up whenever the user wants to accept a call or make sound adjustments. As for US 5,832,098, this device does not allow the user to accept calls or adjust audio without using the phone.

US publication US2001/0035242 by Hughes discloses an assembly comprised of a case for protecting a mobile wireless phone with a retractable headset device installed in an integral pocket.

Patent Abstracts of Japan No. 11055778 A discloses headphone of initially mentioned type having a cord stop mechanism with a brake. This device has substantially the same disadvantages as mentioned above.

WO99/60764 discloses a mechanism, which provides an additional casing, where the wire of the hands-free device can be unwindably collected. The wire can be pulled out of and adjusted according to the need of the user and it can be collected in the casing after the phone call is over. This device also has substantially the same disadvantages as mentioned above.

US5684883 and WO01/65812 provide additional mechanical means for winding and releasing the wire length between the hands-free device, the ear piece and the mobile terminal. However, the above patents had serious drawbacks as the winding or retracting mechanism is always provided as an additional device and therefore needs more storing space. They are not also convenient to carry and complicated to use. None of them provide a user interface to adjust audio or accept phone calls.

GB 2280168 shows an ear piece set which can be winded into a spool. The wires that are connected to the earpieces and the wire that is connected to the plug are interconnected via contactor rings and sliding contacts. The wires connected to the earpieces are automatically winded onto the spool by a spring when a lever is toggled. The wire connected to the plug, however, has to be winded up by hand. The ear piece set has no interface for controlling a device connected to the plug.

US 2009179769 shows an ear piece set with controls for controlling a device connected to the plug. However, there is no possibility for winding up the wires.

US 6497378 describes a hands-free accessory for use with a portable device. It comprises a device cord and an ear plug cord. The two cords are wound up on a respective reel. The two reels may rotate synchronously.

None of the devices mentioned above provides a user interface enabling the user to do common operations such as adjusting the audio or accepting a phone call without having to use the buttons on the mobile phone as such. It has not been possible in the prior art to integrate the electrical circuit and other electronic components as well as plurality of retractable connecting cords in the same unit. Continuous signal flow to and from the mobile phone and the earphone is difficult to maintain when the cords are in rotating motion actuated by pulling or winding thereof. The electrical connection between the cords and the circuits are broken whenever the cords are rotated and also the cords will entangle and knot formation will occur. Therefore it would not be possible to simultaneously operate the phone and adjust the length of the cords.

Therefore, there is a need of developing an integrated hands-free device which alleviates the problem of handling the length of the wire without having to use an additional wire storing unit, provides a user interface for common operations and ensures simultaneous operation of the mobile phone or music players while adjusting the length of the cord according to user's convenience, smaller in size, easy to use as well as not technically complicated to manufacture.

### Objects of the Invention:

The principal object of the present invention is to provide a hands-free accessory for a mobile phone comprising a microphone, actuation switches and at least two retractable cords connected to a mobile phone jack and at least one ear piece respectively, contained in a single unit with uninterrupted signal flow during the adjustment of the length of the cords.

It is another object of the invention to provide an integrated hands-free accessory, which allows the user to adjust the length of the wires according to the necessity during continuation of a call.

It is yet another object of the invention to provide an integrated hands-free accessory for making or receiving phone calls or to conduct other functions such as play back, of the songs stored in the mobile phone or MP3 player, adjustment of the volume etc and to simultaneously adjust the length of the wire, without a break in the acoustic signal or compromising voice quality.

Yet another object of the invention is to provide an integrated hands-free accessory, which is easy to use and not complicated in its design.

This and other objects are achieved by pairing simple electro-mechanical mechanical and electronic functions.

### Summary of the Invention:

Accordingly the present invention provides a hands-free accessory for a use with a portable electronic device such as mobile phones comprising:
- a central unit;
- at least one ear piece being operably connected to the central unit by at least one retractable cord;
- a device connecting means being operably connected to the central unit by a retractable cord;
- a reel assembly within the said central unit having first and second reels for retracting and retaining the said cords, said reel assembly including the reels being adapted to rotate in a common direction;
- an audio signal processing unit comprising an audio circuit housed within the said central unit for processing the audio signals, said audio signal processing unit being operatively connected to said device cord at one end and the at least one ear piece cord at the other end.

The invention is further comprising:
- a spring assembly adapted to retract said cords in their respective reels; said spring assembly being operatively connected to the reel assembly for causing rotation of the reel assembly;
- said audio signal processing unit is electrically connected to said cords by means of a sliding contact mechanism ensuring uninterrupted signal flow to and from the said cords in the event of the cords being in rotation actuated by pulling or retracting action thereof; and
- said audio signal processing unit is coupled with a user interface comprising actuating switches residing on the central unit, for controlling the functions thereof.

Preferably the device comprises a pair of ear-pieces.

Said ear-piece and the device connecting jack reside in the respective recesses of the central unit.

The mainspring of the spring assembly is located in a back recess of the reel assembly.

Said sliding contact mechanism is located in a front recess of the reel assembly. The free ends of the said cords are connected to the back side of said sliding contact mechanism.

The sliding contact mechanism comprises a plurality of concentric electrically conductive rings residing on the same plane on a insulating pad, said conductive rings being spaced apart leaving a uniform circular space between them.

Said electrically conductive rings are electrically insulated from each other by the said insulating pad and said insulating pad and the sliding contact mechanism being rigidly kept in position by a pair of dowel pins extended frontally from the surface of the front recess of the reel assembly.

Preferably said audio signal processing unit is connected to said sliding contact mechanism by spring loaded sliding contacts.

Said sliding contact mechanism is adapted to rotate with the rotation of the reel assembly ensuring uninterrupted signal flow to and from the cords through the audio signal processing unit.

In a preferred embodiment the audio signal processing unit includes an audio circuit for receiving and processing voice signals.

Said audio signal processing unit is coupled with a user interface for controlling the functions thereof.

In a preferred embodiment a locking means is operably connected to a housing of the central unit and is adapted to selectively engage the reel assembly to selectively lock the movement of the cords.

The locking means may comprise a button protruding from the housing and a spring, biasing the locking means to selectively lock the retracting movement of the cords.

The locking means preferably comprises a ring having the button at one side and a locking lug located diametrically opposite of the button ,at the inside surface of the ring, said lug being adapted to engage with at least one ratchet tooth on the reel assembly.

According to another embodiment, the invention relates to a hands-free accessory for a use with a portable electronic device such as mobile phones comprising:
- a central unit;
- at least one ear piece being operably connected to the central unit by at least one retractable cord;
- a device connecting means being operably connected to the central unit by a retractable cord;
- a reel assembly within the said central unit having first and second reels for retracting and retaining said cords, said reel assembly including the reels being adapted to rotate in a common direction;
- an audio signal processing unit comprising an audio circuit housed within the said central unit for processing the audio signals, said audio signal processing unit being operatively connected to said device cord at one end and the at least one ear piece cord at the other end;
which is characterized in that it further comprises:
- a spring assembly adapted to retract said cords in their respective reels; said spring assembly being operatively connected to the reel assembly for causing rotation of the reel assembly;
- said audio signal processing unit is electrically connected to said cords by means of a sliding contact mechanism ensuring uninterrupted signal flow to and from the said cords in the event of the cords being in rotation actuated by pulling or retracting action thereof, and
- said sliding contact mechanism comprises a plurality of concentric electrically conductive rings residing on the same plane on a insulating pad, said conductive rings being spaced apart leaving a uniform circular space between them.

### Brief description of the Drawings:

Fig. 1 is a perspective view of the reel assembly coupled with a pair of ear-pieces and a connecting jack of the integrated hands-free accessory.
Fig 2 is different sectional views of the reel assembly of the hands-free accessory in accordance with the present invention.
Fig. 3 is an exploded left side view of the components of the central unit of the hands-free accessory in accordance with the present invention.
Fig. 4 is another exploded left side view in reverse direction of the components of the central unit of the hands-free accessory in accordance with the present invention.
Fig 5 illustrates an exploded view of the reel assembly and the spring arrangement.
Fig 6 is an exploded view of the complete component assembly of the central unit of the hands-free accessory in accordance with the present invention;
Fig 7 is a sectional view of the reel assembly of the hands-free accessory in accordance with the present invention.
Fig 8 is a schematic diagram illustrating the audio processing unit coupled with the mechanical unit through a sliding contact.

### Detailed description of the embodiments:

The hands-free accessory of the present invention comprises a central unit, a retractable connecting means and at least one earpiece, but a pair of earpieces is preferred for stereo quality sound effect. The hands-free accessory can hang by the cord from the earpieces or from a separate strap (not shown) worn around the neck of the user. A clip can also be included in the central unit to clip it to a jacket or shirt. The hands-free accessory can be connected to a telecommunication device such as a mobile phone (not shown) or to a music player or other devices but for the sake of simplicity the embodiments of the invention are described here below with reference to a mobile phone.

The hands-free accessory of the invention is generally cylindrical in shape but may also take other shapes. The said hands-free accessory in the hanging condition generally resides in the chest region of the user with its back portion touching the chest and the opposite portion containing the operating switches are in the front to enable easy operation by the user's fingers. The mobile phone jack or plug and the ear piece jacks are placed on the bottom and the top side of the said central unit, respectively.

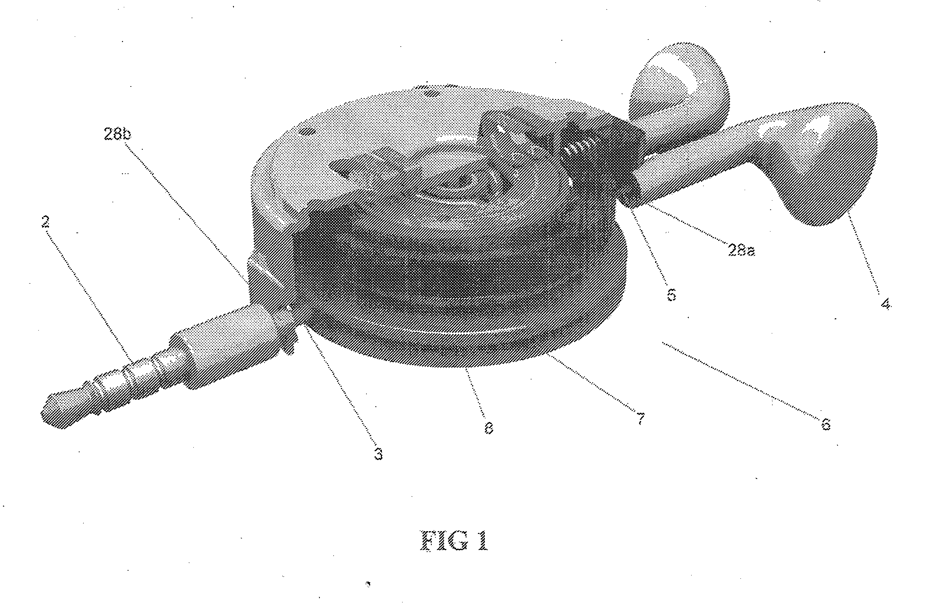

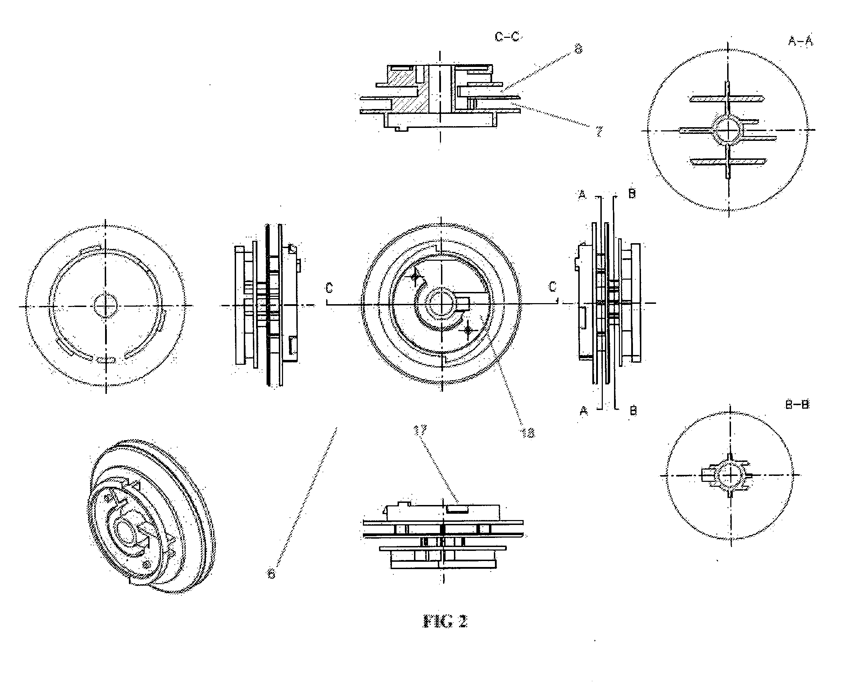

As illustrated in figure 1, the hands-free accessory of the present invention includes a mobile jack or plug 2 connected to one side of the central unit 1 by a retractable mobile jack cord 3 through a bottom recess 28b of the central unit 1, and a pair of earpieces 4 on the opposite side of the central unit 1 by a corresponding pair of retractable ear piece cords 5 through another top recess 28a. The central unit 1 comprises a reel assembly 6. The reel assembly 6 comprises reels for winding up the cords, as will be described in detail hereinafter. The plug 2 may of course be of different type depending on the type of plug used for a specific brand of mobile phone or MP3 player.
As can be seen from fig 2, the reel assembly 6 has two concentric reels 7 & 8 , top recess 18 and bottom recess 17.

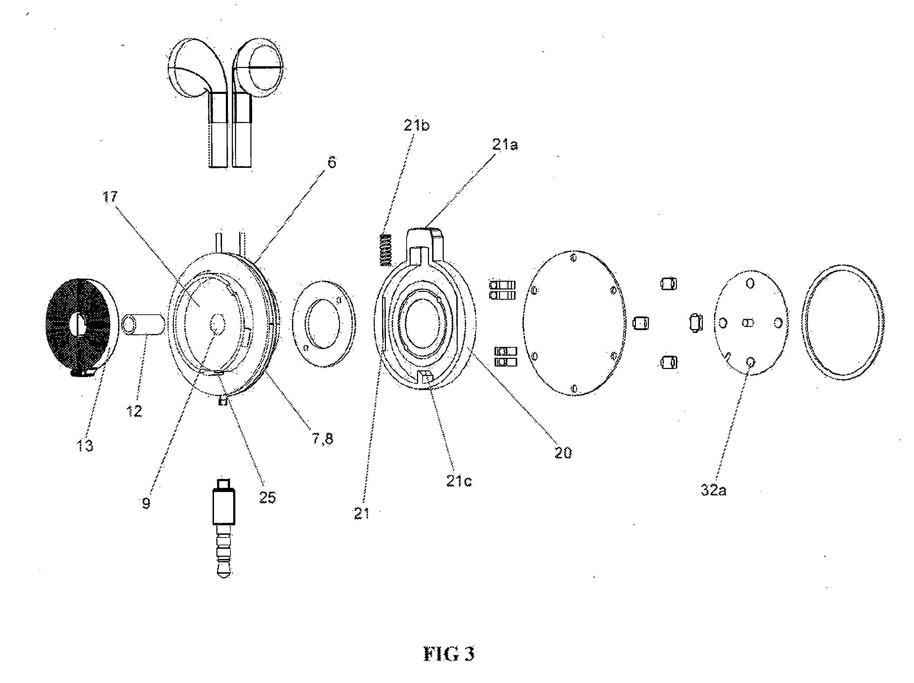

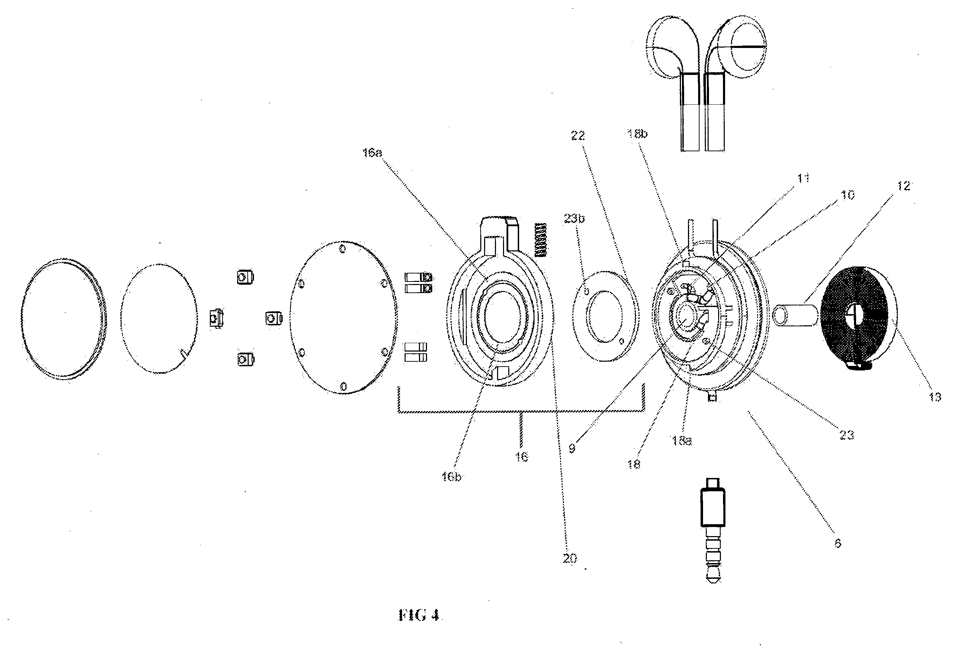

Referring to figure 3 and 4, where figure 3 shows an exploded view of the central unit 1 seen from the rear and figure 4 shows an exploded view of the central unit 1 from the front, the reel assembly 6 includes a back recess area 17 for accommodating a spring assembly 13, first and second concentric reels 7 and 8 for accommodating the retractable mobile jack cord 3 and ear-piece cords 5 respectively, and a front recess area 18 for accommodating a sliding contact assembly 16. The reel assembly with the reels 7, 8 and the recesses 17,18 constitute a unitary part, so that the reels 7 and 8 are always rotating in the same direction and with the same angular speed. The concentric reels 7 and 8 and the sliding contact assembly 16 are operably connected to each other by means of dowel pins 23a, as will be explained in detail below.

A main shaft 12 extends through a central hole 9 in the reel assembly 6 and acts as a bearing for the reel assembly 6 during its rotation. In the back recess area 17 of the reel assembly 6, as shown in figure 3, the spring assembly 13 is accommodated. The construction of the spring assembly is described in detail later.

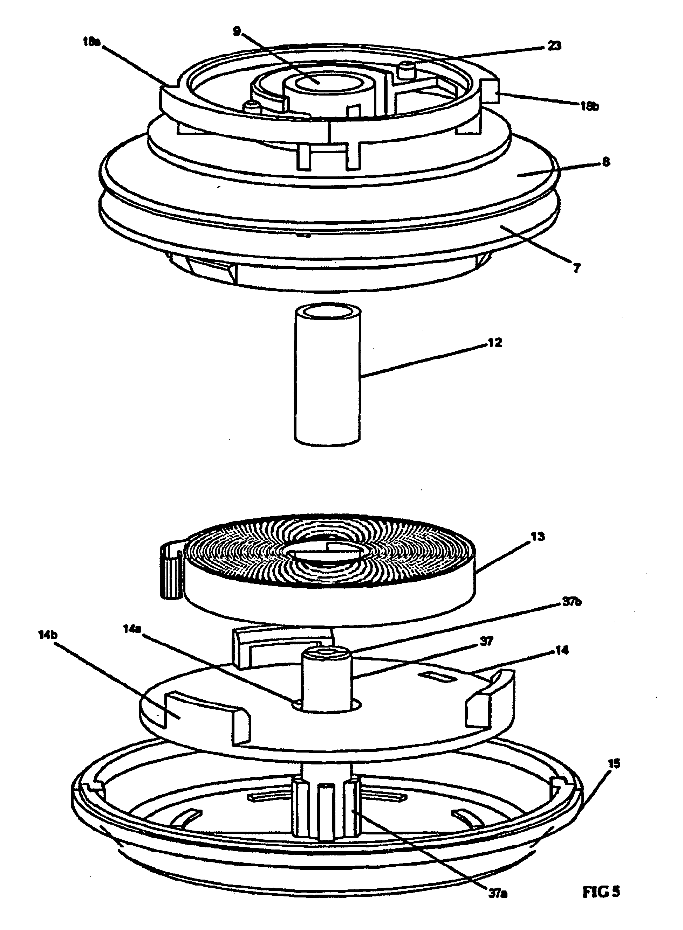

A front recess portion 18 of the reel assembly 6 accommodates a sliding contact assembly 16 for engaging free ends 10 and 11 of the cords 3 and 5 on the rear side of the sliding contact assembly, for carrying the audio signals therein to and from an audio signal processing unit 30 (see figure 5).

According to a preferred embodiment, the front recess 18 of the reel assembly 6 is provided with a pair of ratchet teeth 18a and 18b located diametrically oppositely on the outer wall of the front recess 18 as can be seen from figure 4. The ratchet teeth 18a, 18b are adapted to be locked with a corresponding locking pawl arrangement 21 provided on the inner wall of an intermediate ring 20.

In a preferred embodiment the intermediate ring 20 controls the movement of the retractable cords and will be explained in detail later.

The retractable cords 3 and 5 are wound uniformly in the clockwise direction inside the first and second concentric reels 7 and 8 respectively, without any overlapping. The concentric reels are designed to accommodate the retractable cords 3, 5 so that the movement of the cords is free from any interruptions or entanglements during pull out or winding up of either of the cords in use.
There may be different lengths between the earplug cord and the jack plug cord and corresponding differences in diameter of the reels, so that the central unit gets closer to the mouth when the cords are extended. The different diameters provide different "gearing" for the two reels. Preferably the jack cord has a length of 65-70 cm and the ear plug cord has a length of 30-35 cm.

Fig 5 illustrates the spring assembly 13 which comprises a coiled spring 24, of the type commonly used as main springs in clocks and watches. The spring 24 is wound radially in a clockwise manner as seen from the back and is housed in the back recess 17 of the reel assembly 6. The back recess 17 of the reel assembly 6 is designed to permit the main spring 24 always to seat substantially entirely within the confines of the recess 17.

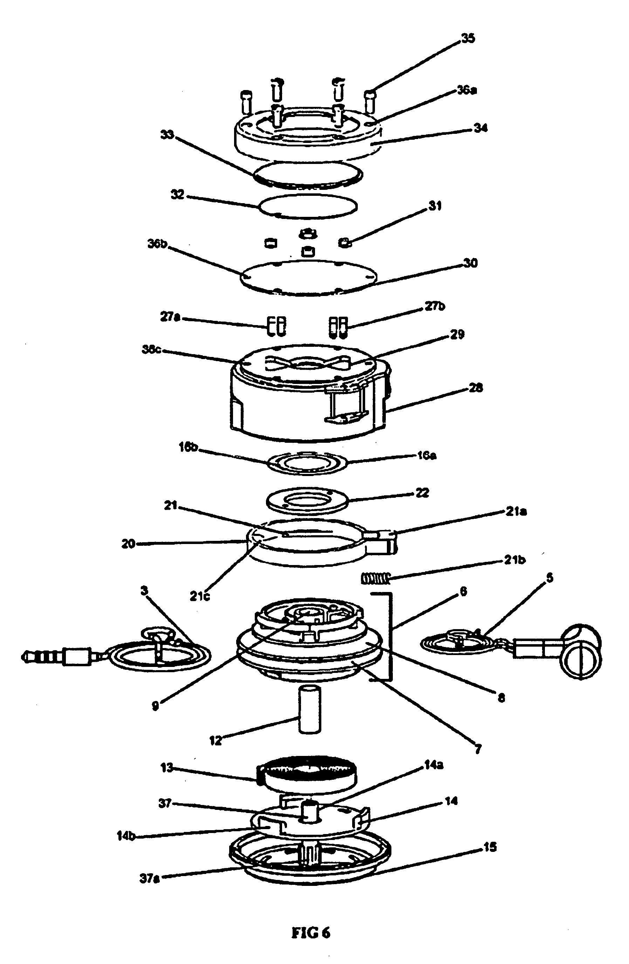

As seen in figure 5, a base plate 14 for the spring assembly 13 is also provided. The base plate 14 has a central hole 14a adapted to receive a shaft 37 on an end cover 15. The base plate 14 preferably has 3 locking uprights 14b for engaging corresponding slots on the outer wall of the back recess 17 of the reel assembly 6. Said base plate 14 and back recess 17 define, in engaged state, an enclosed space for the spring 13. The end cover 15 is configured to be detachably attached, preferably push fitted to the rear side of the housing 28 (fig 6). The end cover has a shaft 37 adapted to extend through the hole 14a and into the bearing 12. The inner end of the spring 13 is adapted to be received in a longitudinal slot 37b in the shaft 37. At the inner end of the shaft 37 there are provided reinforcing ribs to ensure proper strength in the transition between the shaft 37 and the cover 15.

The spring assembly 13 at its outer end is operably connected to the concentric reels 7 and 8 by a lug 25. As the shaft 37 is fixedly connected to the cover 15 which in turn is non-rotatably connected to the housing 28 of the central unit 1, the spring will act to rotate the reel assembly in a clockwise direction (as seen from the front) relative to the housing 28. Thus the windings of the main spring enable it to produce a proper torque to the concentric reels 7 and 8 so that the retraction of the cords residing in the concentric reels is possible.
The cords 3 and 4 are wound in the same direction on the reels 7, 8 so that when one or both of the cords are pulled, they will unwind from the reels 7, 8. On release, the cords are automatically wound in their respective concentric reels 7, 8 due to the tension of the spring 13.

Figure 6 shows an exploded view of the complete component assembly of the central unit 1. The reel assembly 6 comprises a pair of concentric reels 7 and 8 with retractable cords 3 and 5 for the mobile jack plug 2 and earpieces 4 respectively. The spring assembly 13 is arranged inside the reel assembly 6 for facilitating pulling out the cords 3 and 4 during use and retracting the cords back to its normal position when not in use. In a preferred embodiment the mobile jack plug 2 and the ear-pieces 4 are seated within a top recess 28a and a bottom 28b (see figure 1) respectively, provided on a central unit housing 28 which covers the reel assembly 6 from the front. The recesses 28a and 28b are located flush with the corresponding concentric reels 7 and 8.

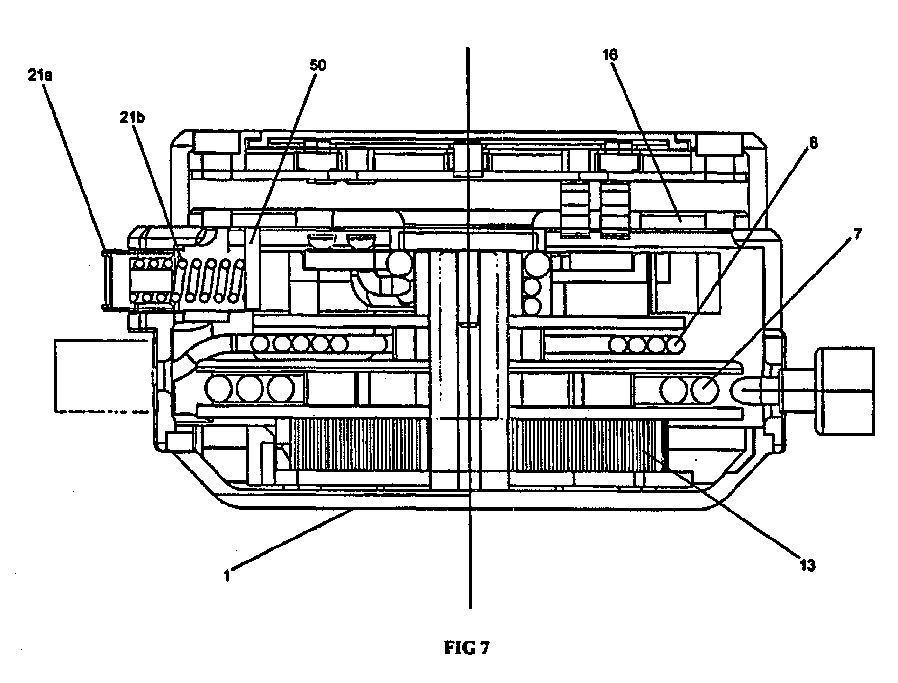

According to the exemplary embodiment of the present invention as shown in figure 6, a locking mechanism for the retractable cords is provided. The intermediate ring 20 is adapted to be rotationally locked with the central unit housing 28, for selectively locking the retracting movement of the cords 3, 4 when the cords are pulled out from the reel assembly 6 to a desired length. The locking mechanism comprises a button 21 a forming an extended portion of the ring 20, and extend through an opening in the housing 28, and a spring 21 b on the inside of the button 21 a and a lug 21 c diametrically opposite of the button 21 a. The spring is acting between the inside of the button 21 a and a rest 50 (see figure 7) on the inside of the housing 28. By pushing the button 21 a the ring 20 can be made to slide back and forth within the housing 28, bringing the lug 21 c in and out of interference with the ratchet teeth 18a, 18b. When the lug 21 c is interfering with the ratchet teeth 18a and 18b the reel assembly 6 with the reels 7, 8 cannot rotate with respect to the housing 28.

The use of the locking mechanism is convenient as it allows a single handed operation by the user and facilitates the use of suitable length of the cords 3 and 5 according to the requirement. The reels can lock in different positions between fully retracted and fully extended length of the cords.

In a preferred embodiment, the front recess 18 of the reel assembly 6 is provided with a ring shaped insulating pad 22. The insulating pad 22 has suitable holes for allowing the free ends of the cords 10 and 11 to pass through. The cords 10 and 11 are soldered to pins from the rings 16a, 16b, an through the rotating circuit board/insulating pad 22. The insulating pad 22 also has a central hole 9 for accommodating the main shaft 12 and is kept in a proper alignment by means of the two dowel pins 23 provided on the surface of the front recess 18 of the reel assembly 6.

A sliding contact mechanism 16 is provided on top of the insulating pad 22 in the front recess 18 of the reel assembly 6. The sliding contact mechanism 16 comprises two electrically conductive concentric rings 16a and 16b residing in the same surface on the insulating pad 22. The insulating pad 22 ensures that the conductive rings 16a and 16b are electrically separated maintaining a uniform circular gap between them.

The two electrically conductive concentric rings are separated from each other by the dowel pins 23 extending from the surface of the front recess 18 through the insulating pad 22. Said dowel pins 23 are made of non-conductive materials such as plastic and are normally formed on the front recess surface by extrusion. The dowel pins 23 keep both the conductive rings as well as the insulating pad in position on the front recess. The dowel pins also ensure that the insulating pad and the sliding contact mechanism rotate along with the reel assembly 6. The free ends of the cords 10 and 11 are fixedly connected at the rear surface of the electrically conductive rings 16a, 16b by suitable means such as soldering. There is a suitable plurality of rings 16a, 16b corresponding with the left and right audio channels and the signal from the microphone.

Whenever, the reel assembly rotates around the main shaft actuated by the action of pulling or winding of the cords, the concentric electrically conductive rings being operably connected to the free ends of the cords, also rotate in the same direction, thereby ensuring a continuous signal flow. By this arrangement, the signal flow is never interrupted when the user, while taking the call, needs to adjust the length of the cords for various reasons by pulling or retracting the cords.

The concentric electrically conductive rings are electrically connected to the audio signal processing unit 30 by spring loaded sliding contacts 27a and 27b located in diametrically opposite direction on the front surface of the sliding contact arrangement 16. There is at least one sliding contact 27a and 27b for each conductive ring 16a 16b. Said spring loaded sliding contacts may preferably be extended frontally through a recess 29 on the housing 28. It will be well understood by a person in the art that the connection of the spring loaded sliding contacts and the electrically conductive rings 16a and 16b is achieved by a suitable means such as silver tip contact, bimetal contact, semiconductor tip or the like to maintain uninterrupted signal flow between them during the rotation of the said sliding contact mechanism 16.

In a preferred embodiment, the sliding contacts 27a, 27b are electrically connected to the audio signal processing unit 30. Two pairs of corresponding function buttons 31 are rigidly fixed on the signal processing unit, preferably by soldering. Standard fixing technique such as soldering can be used to fix the sliding contacts and the function buttons. Once the sliding contacts 27a, 27b are engaged with the moving rings 16a and 16b, they ensure uninterrupted electrical connection and signal flow between them even when there is a slight play of the sliding contact mechanism 16 during rotation and even after wearing of the ring surfaces due to extended use.

As shown in fig 6, there is provided a hollow front flange assembly 34 with plurality of holes 36a on its front surface. The front flange assembly 34 is detachably attached with the audio signal processing unit 30 and the housing 28 having corresponding holes 36b and 36c by means of a plurality of screws 35.

In a preferred embodiment ,a disc 33 is provided in the front flange assembly . This disc 33 is a part that the user will see and push to activate the buttons. In the simplest form, it may be merely a disc with printed indicia on the top. A touch pad 32 with pin 32a (see fig 3) on the underside is provided just below the disc 33. The pin abuts the audio signal processing unit 30. The disc 33 and the touch pad 32 will tip about the pin 32a when the disc is pushed at the edge by the user. Consequently, the pad 32 will press against one of the function buttons 31, which transfers a signal to the audio signal processing unit 30.

In a more advanced embodiment the disc 33 can be a live display where the indicia changes depending on the functions available.

The front flange assembly 34 and the housing 28 form a housing for the sliding contacts 27a, 27b, and the audio signal processing unit 30 and the disc 33 and touch pad 32 leading to user interface integrally formed on the disc. The user interface may contain different actuating switches such as call, receive, volume control, play, stop, fast forward and rewind buttons as found in standard remote control devices.

Figure 7 shows a sectional view of the reel assembly of the hands-free accessory in accordance with the present invention. It can be seen that the release button 21 a of the locking arrangement 21 resides adjacent to the earpiece on the top of the central unit of the accessory for easy access by the user. Further, the pair of ear pieces are also located on the top of the accessory so as to be nearer to the ears of the user. The concentric reels 7 and 8, spring assembly 13 and sliding contact arrangements are also shown in assembled condition.

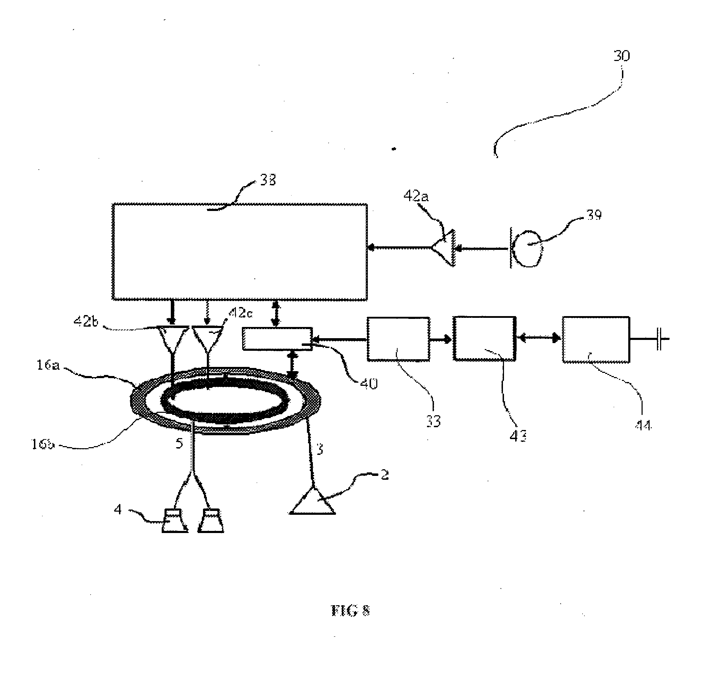

Figure 8 is schematic diagram of the audio signal processing unit 30 in connection with the central unit 1. The audio signal processing unit 30 resides in the front end of the housing 28. The audio signal processing unit can be formed as a circuit board. Normally ,the audio signal processing unit includes a microphone 40 and an audio circuit 38. The microphone can however, be placed at a suitable location in the central unit or within one or both of the earpieces. The audio circuit can be configured to receive, process and transmit audio signals to and from the mobile phone and the earpiece. The audio circuit may also be configured to include noise reduction circuitry for good voice quality, circuitry for actuating play back and recordings when the mobile phone is operated as a music player and the like as would be evident to a skilled person.

In a preferred embodiment the audio signal processing unit 30 may also contain an additional transceiver 40 to receive and transmit signals to and from the audio circuit and plurality of amplifiers 42a, 42b and 42c. As described before the Audio signal processing unit 30 is also connected to a user interface 33 to transmit users commands to the audio circuit.

Referring to figure 8 the functioning of the hands-free device is now described. The mobile phone transmits a two-channel audio signal to the central unit 1 through the mobile phone jack cord 3. The two-channel audio signal (stereo signal) transmitted can be a synthesized one or original two-channel stereo signal based on the audio signal obtained from a caller through the mobile phone. The two-channel signal may also be a stereo audio signal output when the mobile phone acts as a music player.

The two-channel stereo signal from the mobile phone is received by the central unit via mobile jack cord 3 and passed on to the circuit through the sliding contact mechanism 16. In a preferred embodiment a transceiver 40 is electrically connected through the sliding contacts 27a, 27b to the sliding rings 16a and 16b. The transceiver 40 processes the received audio signal to a two-channel audio signal and forward it to an audio circuit 38 included in the audio signal processing unit 30. The audio circuit 38 further processes and separates the audio signal received from the transceiver 40 into first and second channels of audio information and amplify them through two respective amplifiers 42b and 42c before forwarding them to the right and left ear pieces through the respective connecting cords 5 connected to the audio circuit by the respective electrically conductive ring 16b. The first channel of audio information is supplied to the one earpiece which reproduces the first channel of audio information into sound by the integrated transducer. Similarly, the second channel of audio information is supplied to the second earpiece which converts the signal into corresponding second audio sound by the integrated transducer provided on the second earpiece.

It will be well understood by a person skilled in the art that the audio processing unit can be configured in various other manners for more independent audio channels through a symmetrical configuration of loudspeakers.

When the user responds or takes a call a microphone 39 receives voice signals. An audio amplifier 42a amplifies the voice signals. The amplified output is received and processed by the audio circuit 38 and forwards the processed voice signals to the transceiver 40 for transmitting to the mobile phone jack 3 through the respective sliding contact 16a.

The central unit 1 of the hands-free accessory also comprises a user input interface 33 for controlling the hands-free accessory as well as the mobile phone for making or receiving phone calls or to conduct other functions such as play back, of the songs stored in the mobile phone, adjustment of volume and the like.

Depending on the interface between the central unit 1 and the mobile phone or MP3 player the signal processing unit can be driven by power supply from the mobile phone or MP3 player. An example of such an interface is a mini USB plug. Alternatively, the audio signal processing unit 38 of the hands-free accessory can also have a battery 43 for providing operating power to the electronic components such as the microphone, transceiver, amplifier etc. The battery may be rechargeable and a charger interface 44 may also be included in central unit 1 of the hands-free accessory .
It is also possible to avoid amplifiers if the output signal from the mobile phone to the jack cord has sufficient amplitude to excite the transducers in the ear-pieces and if the microphone gives a signal with a sufficient amplitude to the mobile phone.

The cord 5 can also work as an antenna for radio, like conventional ear plugs. From the above description it is evident that when a user is taking a mobile phone call through the hands-free accessory, the acoustic signal flows to and from the mobile phone and the earpiece through the cords, sliding contact and the audio circuit. When the cords are stationary at a fixed length, the reels 7 and 8 are also stationary and the sliding contact mechanism acts as a stationary contact like any other known wired hands-free accessory. However, when the user starts pulling the cords or press the locking means 21 to retract the mobile jack cord or the ear piece cord either separately or together to adjust the length thereof during the continuation of a call, the reel assembly including the concentric reels 7 and 8 start rotating. Consequently, the free ends 10 and 11 of the cords also start rotating with the sliding contact mechanism 16 and the audio signal can still flow through the sliding contacts engaged on the front side of the sliding contact arrangement, to and from the audio signal processing unit. This mechanism ensures that there is no interruption in the signal flow even when the cords are pulled or retracted during continuation of a call.

## Claims

1. A hands-free accessory for use with a portable electronic device such as mobile phones comprising:
- a central unit (1);
- at least one ear piece (4) being operably connected to the central unit (1) by at least one retractable ear piece cord (5);
- a device connecting means (2), for selective connection to the portable electronic device, said device connecting means (2) being operably connected to the central unit (1) by a retractable device cord (3);
- a reel assembly (6) within said central unit (1) having first (7) and second (8) reels for retracting and retaining said cords (3, 5);
- a spring assembly (13) adapted to retract said cords (3, 5) in their respective first and second reels (7. 8); said spring assembly (13) being operatively connected to the reel assembly (6) for causing mutual synchronized rotation of the first and second reels (7, 8);
**characterised in that** it further comprises:
- an audio signal processing unit (30) comprising an audio circuit housed within said central unit (1) for processing audio signals, said audio signal processing unit (30) being operatively connected to said device cord (3) at one end and the at least one ear piece cord (5) at the other end;
- said audio signal processing unit (30) is electrically connected to said cords (3, 5) by means of a sliding contact mechanism (16) ensuring uninterrupted signal flow to and from said cords (3, 5) in the event of the reels (7, 8) being in rotation actuated by pulling or retracting action thereof; and
- said audio signal processing unit (30) is coupled with a user interface (33) comprising actuating switches (31) residing on the central unit (1).

2. A hands-free accessory according to claim 1, **characterised in that** it comprises a pair of ear-pieces (4).

3. A hands-free accessory according to claim 1 or 2, **characterised in that** the device connecting means (2) is at least one device connecting jack and that the at least one ear-piece (4) and the device connecting jack (2) reside in respective recesses (28a, 28b) of the central unit (1).

4. A hands-free accessory according one of the preceding claims, **characterised in that** a main spring (13) of the spring assembly is located in a back recess (17) of the reel assembly (6).

5. A hands-free accessory according to one of the preceding claims, **characterised in that** the sliding contact mechanism (16) is located in a front recess (18) of the reel assembly (6).

6. A hands-free accessory according to one of the preceding claims, **characterised in that** the free ends of said cords (3, 5) are connected to a back side of said sliding contact mechanism (16).

7. A hands-free accessory according to claim 6, **characterised in that** said sliding contact mechanism (16) comprises a plurality of concentric electrically conductive rings (16a, 16b) residing on the same plane on a insulating pad (22), said conductive rings (16a, 16b) being spaced apart leaving a uniform circular space between them.

8. A hands-free accessory according to claim 7, **characterised in that** said electrically conductive rings (16a, 16b) are electrically insulated from each other by said insulating pad (22), said insulating pad (22) and the sliding contact mechanism (16) being rigidly kept in position by a pair of dowel pins (23) extended frontally from the surface of the front recess (18) of the reel assembly (6).

9. A hands-free accessory according to claim 1, **characterised in that** the audio signal processing unit (30) is connected to said sliding contact mechanism (16) by spring loaded sliding contacts (27a, 27b).

10. A hands-free accessory according to any of the preceding claims, **characterised in that** that said sliding contact mechanism (16) is adapted to rotate with the rotation of the reel assembly (6) ensuring uninterrupted signal flow to and from the cords (3, 5) through the audio signal processing unit (30).

11. A hands-free accessory according to claim 1, **characterised in that** said audio signal processing unit (30) includes an audio circuit for receiving and processing voice signals from a microphone on said central unit (1).

12. A hands-free accessory according to any of the preceding claims, **characterised in that** a locking means (20, 21 a, 21 b, 21 c) is operably connected to a housing of the central unit (1) and is adapted to selectively engage the reel assembly (6) to selectively lock the retracting movement of the cords (3, 5).

13. A hands-free accessory according to claim 12, **characterised in that** the locking means (20, 21 a, 21 b, 21 c) comprises a button (21 a) protruding from the housing and a spring (21b), biasing the locking means (20, 21a, 21b, 21c) to selectively lock the retracting movement of the cords (3, 5).

14. A hands-free accessory according to claims 12 and 13, **characterised in that** the locking means (20, 21 a, 21 b, 21 c) comprises a ring (20) having the button (21 a) at one side and a locking lug (21 c) located diametrically opposite of the button (21 a), at the inside surface of the ring (20), said lug (21 c) being adapted to engage with at least one ratchet tooth (18a, 18b) on the reel assembly (6).

15. A hands-free accessory according to any of the preceding claims, **characterised in that** said first and second reels (7, 8) are adapted to rotate in a common direction.

16. A hands-free accessory according to any of the preceding claims, **characterised in that** said first and second reels (7, 8) are fixedly connected to one another.

## Patentansprüche

1. Freisprecheinrichtung zum Gebrauch mit einem tragbaren elektronischen Gerät, wie z. B. Mobiltelefonen, umfassend:
- eine Zentraleinheit (1);
- mindestens eine Hörmuschel(4) betriebsfähig verbunden mit der Zentraleinheit (1) mit mindestens einem einziehbaren Hörmuschelkabel (5);
- ein Geräteverbindungsmittel (2) zur selektiven Verbindung mit dem tragbaren elektronischen Gerät, wobei das genannte Geräteverbindungsmittel (2) betriebsfähig mit der Zentraleinheit (1) mit einem einziehbaren Gerätekabel (3) verbunden ist;
- eine Spulenbaugruppe (6) in der genannten Zentraleinheit (1) mit ersten (7) und zweiten (8) Spulen zum Einziehen und Zurückhalten der Kabel (3, 5);
- eine Federbaugruppe (13), angepasst zum Zurückziehen der Kabel (3, 5) in ihre jeweilige erste und zweite Spule (7, 8); wobei die Federbaugruppe (13) betriebsfähig verbunden zur Spulenbaugruppe (6) ist, um eine gegenseitig synchronisierte Drehungen der ersten und zweiten Spulen (7, 8) zu bewirken;
**dadurch gekennzeichnet, dass** sie im Weiteren umfasst:
- eine Audiosignalverarbeitungseinheit (30), umfassend eine in der Zentraleinheit (1) untergebrachte Audioschaltung zum Verarbeiten von Audiosignalen, wobei die Audiosignalverarbeitungseinheit (30) operativ mit dem Gerätekabel (3) auf einer Seite und dem mindestens einen Hörmuschelkabel (5) auf der anderen Seite verbunden ist;
- wobei die genannte Audiosignalverarbeitungseinheit (30) mit den Kabeln (3, 5) mittels eines Schleifkontaktmechanismus (16) elektrisch verbunden ist, welcher einen ununterbrochenen Signalfluss zu und von den Kabeln (3, 5), wenn sich die Spulen durch einen Herauszieh- oder Zurückziehvorgang drehen, sicherstellt; und
- die Audiosignalverarbeitungseinheit (30) mit einer Benutzerschnittstelle (33) verbunden ist, welche einen auf der Zentraleinheit (1) angeordneten Betätigungsschalter (31) umfasst.

2. Freisprecheinrichtung nach Anspruch 1, **dadurch gekennzeichnet, dass** sie ein Paar Hörmuscheln (4) umfasst.

3. Freisprecheinrichtung nach Anspruch 1 oder 2, **dadurch gekennzeichnet, dass** das Geräteverbindungsmittel (2) zumindest eine Geräteverbindungsbuchse ist, und dass zumindest eine Hörmuschel (4) und die Geräteverbindungsbuchse (2) in jeweiligen Vertiefungen (28a, 28b) der Zentraleinheit (1) angeordnet sind.

4. Freisprecheinrichtung nach einem der vorhergehenden Ansprüche, **dadurch gekennzeichnet, dass** eine Hauptfeder (13) der Federbaugruppe in einer rückseitigen Vertiefung (17) der Spulenbaugruppe (6) angeordnet ist.

5. Freisprecheinrichtung nach einem der vorhergehenden Ansprüche, **dadurch gekennzeichnet, dass** der Schleifkontaktmechanismus (16) in einer vorderseitigen Vertiefung (18) der Spulenbaugruppe (6) angeordnet ist.

6. Freisprecheinrichtung nach einem der vorhergehenden Ansprüche, **dadurch gekennzeichnet, dass** die freien Enden der Kabel (3, 5) auf der Rückseite des Schleifkontaktmechanismus (16) verbunden sind.

7. Freisprecheinrichtung nach Anspruch 6, **dadurch gekennzeichnet, dass** der Schleifkontaktmechanismus (16) eine Vielzahl von konzentrischen, elektrisch leitenden Ringen (16a, 16b), welche auf der gleichen Ebene auf einer isolierenden Unterlage (22) angeordnet sind, umfasst, wobei die leitenden Ringe (16a, 16b) voneinander beabstandet sind und einen gleichmäßig kreisförmigen Raum zwischen sich lassen.

8. Freisprecheinrichtung nach Anspruch 7, **dadurch gekennzeichnet, dass** die elektrisch leitenden Ringe (16a, 16b) durch die isolierende Unterlage (22) gegeneinander elektrisch isoliert werden, wobei die isolierende Unterlage (22) und der Schleifkontaktmechanismus (16) fest durch ein Paar Spannstifte(23), welche nach vorne aus der Oberfläche der vorderen Vertiefung (18) der Spulenbaugruppe (6) hervorragen, in Position gehalten werden.

9. Freisprecheinrichtung nach Anspruch 1, **dadurch gekennzeichnet, dass** die Audiosignalverarbeitungseinheit (30) mit dem genannten Schleifkontaktmechanismus (16) durch federbelastete Schleifkontakte (27a, 27b) verbunden ist.

10. Freisprecheinrichtung nach einem der vorhergehenden Ansprüche, **dadurch gekennzeichnet, dass** der genannte Schleifkontaktmechanismus (16) dazu geeignet ist, sich mit der Drehung der Spuleneinheit (6) zu drehen und einen ununterbrochenen Signalfluss zu und von den Kabeln (3, 5) durch die Audioverarbeitungseinheit (30) sicherzustellen.

11. Freisprecheinrichtung nach Anspruch 1, **dadurch gekennzeichnet, dass** die genannte Audiosignalverarbeitungseinheit (30) einen Audioschaltkreis zum Empfangen und Verarbeiten von Stimmsignalen von einem Mikrophon auf der Zentraleinheit (1) einschließt.

12. Freisprecheinrichtung nach einem der vorhergehenden Ansprüche, **dadurch gekennzeichnet, dass** ein Verriegelungsmittel (20, 21a, 21b, 21c) zum Gehäuse der Zentraleinheit (1) betriebsfähig verbunden ist, und dass es dazu geeignet ist, um selektiv in die Spuleneinheit (6) einzugreifen, um selektiv die Rückziehbewegung der Kabel zu verriegeln.

13. Freisprecheinrichtung nach Anspruch 12, **dadurch gekennzeichnet, dass** das Verriegelungsmittel (20, 21a, 21b, 21c) einen (21a) aus dem Gehäuse hervorstehenden Schalter und eine Feder (21b) umfasst, welche das Verriegelungsmittel (20, 21a, 21b, 21c) spannt, um selektiv die Rückzugsbewegung der Kabel(3,5) zu verriegeln.

14. Freisprecheinrichtung nach Anspruch 12 und 13, **dadurch gekennzeichnet, dass** das Verriegelungsmittel (20, 21a, 21b, 21c) einen Ring (20) mit einem Schalter (21a) auf einer Seite und einer Haltenase (21c), welche sich diametral gegenüber eines Schalters (21a) befindet, auf der inneren Oberfläche des Rings(20) umfasst, wobei die Nase (21c) zum Einrasten mit zumindest einem Rastzahn (18a, 18b) auf der Spulenbaugruppe (6) geeignet ist.

15. Freisprecheinrichtung nach einem der vorhergehenden Ansprüche, **dadurch gekennzeichnet, dass** die genannten ersten und zweiten Spulen (7, 8) geeignet sind, um in eine gemeinsame Richtung zu drehen.

16. Freisprecheinrichtung nach einem der vorhergehenden Ansprüche, **dadurch gekennzeichnet, dass** die genannten ersten und zweiten Spulen (7, 8) fest zueinander montiert sind.

## Revendications

1. Accessoire mains libres destiné à être utilisé avec un dispositif électronique portable tel que des téléphones mobiles, comprenant :
- une unité centrale (1) ;
- au moins une oreillette (4) reliée de manière opérationnelle à l'unité centrale (1) par au moins un cordon d'oreillette rétractable (5) ;
- des moyens de connexion de dispositif (2) pour connexion sélective au dispositif électronique portable, les moyens de connexion de dispositif (2) étant reliés de manière opérationnelle à l'unité centrale (1) par un cordon de dispositif rétractable (3) ;
- un ensemble de bobines (6) situé dans l'unité centrale (1) ayant des première (7) et seconde (8) bobines pour rentrer et retenir les cordons (3, 5) ;
- un ensemble de ressorts (13) adapté pour rentrer les cordons (3, 5) dans leurs première et seconde bobines respectives (7, 8) ; l'ensemble de ressorts (13) étant relié de manière opérationnelle à l'ensemble de bobines (6) pour provoquer une rotation synchronisée mutuelle des première et seconde bobines (7, 8) ;
**caractérisé en ce qu'**il comprend de plus :
- une unité de traitement de signaux audio (30) comprenant un circuit audio reçu dans l'unité centrale (1) pour traiter des signaux audio, l'unité de traitement de signaux audio (30) étant reliée de manière opérationnelle au cordon de dispositif (3) à une extrémité et au au moins un cordon d'oreillette (5) à l'autre extrémité ;
- l'unité de traitement de signaux audio (30) est reliée électriquement aux cordons (3, 5) par l'intermédiaire d'un mécanisme de contact coulissant (16) assurant un flux de signaux ininterrompu vers et à partir des cordons (3, 5) dans le cas où les bobines (7, 8) sont actionnées en rotation par une action de traction ou de rentrée de ceux-ci ; et
- l'unité de traitement de signaux audio (30) est reliée à une interface utilisateur (33) comprenant des commutateurs d'actionnement (31) situés sur l'unité centrale (1).

2. Accessoire mains libres selon la revendication 1, **caractérisé en ce qu'**il comprend une paire d'oreillettes (4).

3. Accessoire mains libres selon les revendications 1 ou 2, **caractérisé en ce que** les moyens de connexion de dispositif (2) sont au moins un jack de liaison de dispositif et **en ce que** la au moins une oreillette (4) et le jack de connexion de dispositif (2) sont situés dans des évidements respectifs (28a, 28b) de l'unité centrale (1).

4. Accessoire mains libres selon l'une quelconque des revendications précédentes, **caractérisé en ce qu'**un ressort principal (13) de l'ensemble de ressorts est situé dans un évidement arrière (17) de l'ensemble de bobines (6).

5. Accessoire mains libres selon l'une quelconque des revendications, **caractérisé en ce que** le mécanisme de contact coulissant (16) est situé dans un évidement avant (18) de l'ensemble de bobines (6).

6. Accessoire mains libres selon l'une quelconque des revendications précédentes, **caractérisé en ce que** les extrémités libres des cordons (3, 5) sont connectées à un côté arrière du mécanisme de contact coulissant (16).

7. Accessoire mains libres selon la revendication 6, **caractérisé en ce que** le mécanisme de contact coulissant (16) comprend plusieurs anneaux concentriques électriquement conducteurs (16a, 16b) situés sur le même plan sur un patin isolant (22), les anneaux conducteurs (16a, 16b) étant espacés en laissant un espace circulaire uniforme entre eux.

8. Accessoire mains libres selon la revendication 7, **caractérisé en ce que** les anneaux électriquement conducteurs (16a, 16b) sont isolés électriquement les uns des autres par le patin isolant (22), le patin isolant (22) et le mécanisme de contact coulissant (16) étant maintenus rigidement en position par deux ergots de centrage (23) étendus de manière frontale depuis la surface de l'évidement avant (18) de l'ensemble de bobines (6).

9. Accessoire mains libres selon la revendication 1, **caractérisé en ce que** l'unité de traitement de signaux audio (30) est connectée au mécanisme de contact coulissant (16) par des contacts coulissants chargés par ressort (27a, 27b).

10. Accessoire mains libres selon l'une quelconque des revendications précédentes, **caractérisé en ce que** le mécanisme de contact coulissant (16) est adapté pour tourner avec la rotation de l'ensemble de bobines (6) assurant un flux de signaux ininterrompu vers et à partir des cordons (3, 5) à travers l'unité de traitement de signaux audio (30).

11. Accessoire mains libres selon la revendication 1, **caractérisé en ce que** l'unité de traitement de signaux audio (30) comprend un circuit audio pour recevoir et traiter des signaux vocaux provenant d'un microphone situé sur l'unité centrale (1).

12. Accessoire mains libres selon l'une quelconque des revendications précédentes, **caractérisé en ce que** des moyens de blocage (20, 21a, 21b, 21c) sont reliés de manière opérationnelle à un boîtier de l'unité centrale (1) et sont adaptés pour venir en prise de manière sélective avec l'ensemble de bobines (6) pour bloquer sélectivement le mouvement de rentrée des cordons (3, 5).

13. Accessoire mains libres selon la revendication 12, **caractérisé en ce que** les moyens de blocage (20, 21a, 21b, 21c) comprennent un bouton (21a) faisant saillie à partir du boîtier et un ressort (21b), rappelant les moyens de blocage (20, 21a, 21b, 21c) pour bloquer sélectivement le mouvement de rentrée des cordons (3, 5).

14. Accessoire mains libres selon les revendications 12 et 13, **caractérisé en ce que** les moyens de blocage (20, 21a, 21b, 21c) comprennent un anneau (20) ayant le bouton (21a) au niveau d'un côté et une patte de blocage (21c) située diamétralement opposée au bouton (21a), au niveau de la surface intérieure de l'anneau (20), la patte (21c) étant adaptée pour venir en prise avec au moins une dent de rochet (18a, 18b) sur l'ensemble de bobines (6).

15. Accessoire mains libres selon l'une quelconque des revendications précédentes, **caractérisé en ce que** les première et seconde bobines (7, 8) sont adaptées pour tourner dans une direction commune.

16. Accessoire mains libres selon l'une quelconque des revendications précédentes, **caractérisé en ce que** les première et seconde bobines (7, 8) sont reliées de manière fixe l'une à l'autre.
